# EUROPÄISCHE PATENTSCHRIFT

(11) **EP 3 221 578 B1**
(45) Veröffentlichungstag und Bekanntmachung des Hinweises auf die Patenterteilung: **17.03.2021**
(21) Anmeldenummer: 15784389.7
(22) Anmeldetag: 23.10.2015
(51) Int. Cl.: F03D 1/00, F03D 1/06

(54) **AUSLEGUNG EINER WINDENERGIEANLAGE**
DESIGN OF A WIND TURBINE
CONCEPTION D'UNE ÉOLIENNE

(30) Priorität: 19.11.2014 DE 102014223640
(43) Veröffentlichungstag der Anmeldung: 27.09.2017
(73) Patentinhaber: Wobben Properties GmbH, 26607 Aurich (DE)
(72) Erfinder: BEEKMANN, Alfred, 26639 Wiesmoor (DE); KRUSE, Marcel, 27616 Beverstedt (DE)
(74) Vertreter: Eisenführ Speiser
(86) Internationale Anmeldenummer: PCT/EP2015/074589
(87) Internationale Veröffentlichungsnummer: WO 2016/078869

(56) Entgegenhaltungen:
- EP-A1- 2 551 519
- US-A1- 2004 105 751
- US-A1- 2011 309 620

## Beschreibung

Die vorliegende Erfindung betrifft ein Verfahren zum Auslegen einer Windenergieanlage sowie eine entsprechende Windenergieanlage. Die Erfindung betrifft außerdem das Betreiben einer Windenergieanlage. Die Erfindung betrifft auch einen Windpark mit mehreren Windenergieanlagen sowie ein Verfahren zum Betreiben eines solchen Windparks.

Windenergieanlagen sind allgemein bekannt und sie erzeugen elektrischen Strom aus Windenergie. Windenergieanlagen können dabei ganz grob nach ihrer Nennleistung und dem Windstandort klassifiziert werden, also danach, wie stark der Wind an dem geplanten Standort der Windenergieanlage erfahrungsgemäß ist. Darüber hinaus ist die Windenergieanlage so auszulegen, dass sie einer sogenannten 50-Jahres-Böe standhält. Hier liegt der Gedanke zugrunde, dass statistisch alle 50 Jahre eine so große Böe auftritt, die die Windenergieanlage mechanisch gefährden oder sogar zerstören kann. Die Windenergieanlage muss also eine solche Böe aushalten können, ohne zerstört zu werden oder nennenswerten Schaden davon zu tragen.

Um eine Windenergieanlage vor Sturmschäden zu schützen, ist es bereits bekannt, Windenergieanlagen bei sehr hohen Windgeschwindigkeiten abzuschalten und zuvor die Rotorblätter in eine sogenannte Fahnenstellung zu bringen. Die Windenergieanlage ist also in einem solchen Zustand nicht mehr in Betrieb und kann dadurch starken Windgeschwindigkeiten besser standhalten. Darunter fällt auch die Belastung durch eine 50-Jahres-Böe.

Gleichwohl kann eine Sturmsituation und insbesondere eine dabei auftretende 50-Jahres-Böe doch sehr starke Kräfte auf Komponenten der Windenergieanlage ausüben. Problematisch neben der hohen Windgeschwindigkeit einer solchen 50-Jahres-Böe ist auch, dass diese unvorhergesehen und eher stoßartig auftreten kann. Bei Windstille oder schwachen Winden ist nicht mit einer 50-Jahres-Böe zu rechnen, aber bei Sturmwindgeschwindigkeiten. Wenn mit einer 50-Jahres-Böe grundsätzlich zu rechnen ist, ist aber dennoch nicht vorhersehbar, ob in Kürze eine auftritt oder nicht.

Im Ergebnis muss die Windenergieanlage entsprechend stabil, nämlich mechanisch stabil, ausgelegt sein. Besonders kritisch bzw. anfällig für eine solche Belastung sind der Turm der Windenergieanlage, die Rotorblätter, ein Maschinenträger zum Tragen der Komponenten einschließlich des Generators und damit des aerodynamischen Rotors, wenn jedenfalls eine getriebelose Windenergieanlage verwendet wird, und das Fundament der Windenergieanlage.

Entsprechend können also sehr hohe Kosten allein dadurch entstehen, dass die Windenergieanlage für dieses eine Ereignis, das statistisch gesehen einmal in 50 Jahren auftritt, ausgelegt sein muss. Insbesondere müssen die eben genannten Komponenten, die besonders anfällig sein können, entsprechend ausgelegt sein, was entsprechend kostspielig sein kann.

Dabei ist besonders bei einer entsprechend widerstandsfähigen Auslegung der Rotorblätter damit zu rechnen, dass dies einen gewissen Materialeinsatz und damit ein gewisses Gewicht erforderlich macht. Entsprechend ist ein solches hohes Gewicht der Rotorblätter wiederum durch den Maschinenträger und/oder Lagerung der Rotorblätter zu berücksichtigen. Diese Elemente müssten dann also ebenfalls größer dimensioniert werden. Das gilt auch für andere Elemente und letztlich muss das Fundament all diese Gewichte aufnehmen und gleichzeitig eine entsprechende Windbelastung aufnehmen

Ein Auslegungsverfahren aus dem Stand der Technik ist aus EP 2 551 519 A1 bekannt.

Der vorliegenden Erfindung liegt also die Aufgabe zugrunde, wenigstens eines der oben genannten Probleme zu adressieren. Insbesondere soll der Aufwand, der durch das Berücksichtigen einer 50-Jahres-Böe entsteht, verringert werden. Zumindest soll zu bisher bekannten Lösungen eine alternative Lösung vorgeschlagen werden.

Erfindungsgemäß wird ein Verfahren nach Anspruch 1 vorgeschlagen. Demnach wird eine Windenergieanlage ausgelegt, die zumindest einen Generator und einen aerodynamischen Rotor mit Rotorblättern aufweist. Zunächst wird grundsätzlich die Größe der auszulegenden Windenergieanlage für einen vorgesehenen Aufstellungsort festgelegt. Das betrifft insbesondere die Vorgabe des Rotordurchmessers und die Achshöhe des Rotors. Dabei wird hier von einem Horizontalachsenrotor ausgegangen. Außerdem geht die vorliegende Erfindung grundsätzlich von einem Rotor mit drei Rotorblättern aus, wobei der Erfindungsgedanke hierauf aber nicht beschränkt ist. Der Rotordurchmesser bezieht sich auf den Kreis, den die Rotorblätter im Betrieb beschreiben.

Die so von den ersten Grunddaten her festgelegte Windenergieanlage wird nun auf eine reduzierte Maximalbelastung ausgelegt, nämlich auf eine Belastung, die niedriger ist als eine Maximalbelastung, die auftritt, wenn eine 50-Jahres-Böe von einer maximal belastenden Seite auf die Windenergieanlage trifft.

Hierbei wurde zunächst erkannt, dass die Windenergieanlage zwar auf eine 50-Jahres-Böe ausgelegt sein muss, dass die Windenergieanlage also eine 50-Jahres-Böe aushalten muss, dass sie aber nicht unbedingt eine 50-Jahres-Böe aus beliebiger Richtung aushalten muss.

Dem liegt auch der Gedanke zugrunde, dass zwar das Auftreten einer 50-Jahres-Böe kaum vorhersehbar ist, die Richtung, aus der eine solche 50-Jahres-Böe kommen könnte, durchaus aber in etwa bekannt ist. Eine solche 50-Jahres-Böe tritt nämlich im Zusammenhang mit bereits existierenden hohen Windgeschwindigkeiten auf. Und bei hohen Windgeschwindigkeiten ist trotz Turbulenzen die ungefähre Richtung der Windgeschwindigkeit und damit die ungefähre Richtung aus der die 50-Jahres-Böe kommen könnte, jeweils in etwa bekannt, nämlich aus der Richtung, aus der auch in dem Moment der Wind kommt.

Es ist nun also möglich, die Windenergieanlage schwächer auszulegen, als für das Aushalten einer 50-Jahres-Böe aus beliebiger Richtung nötig wäre.

Das Auslegen auf eine solche reduzierte Maximalbelastung kann besonders dann sinnvoll sein, wenn zumindest sichergestellt wird, dass eine 50-Jahres-Böe die Windenergieanlage nicht von einer maximal belastenden Seite trifft.

Vorzugsweise wird die Windenergieanlage auf eine reduzierte Maximalbelastung ausgelegt, die auftritt, wenn die 50-Jahres-Böe auf die Windenergieanlage aus einer Richtung auftrifft, die nicht zur maximalen Belastung führt. Besonders vorteilhaft ist es, auf eine reduzierte Maximalbelastung auszulegen, die auftritt, wenn die 50-Jahres-Böe auf die Windenergieanlage aus einer Richtung auftrifft, die zur kleinsten Belastung führt.

Bei der maximal auftretenden Belastung kann es auf die Stellung der Rotorblätter ankommen. Wenn die Rotorblätter in Fahnenstellung stehen, was bei sehr hohen Windgeschwindigkeiten eine übliche Stellung ist, kann beispielsweise eine seitlich auf die Gondel der Windenergieanlage auftreffende Böe zu einer hohen, vielleicht der höchsten Belastung führen.

Erfindungsgemäß ist die reduzierte Minimalbelastung eine Belastung, die auftritt, wenn die 50-Jahres-Böe auf die Windenergieanlage von vorne trifft, insbesondere dann, wenn die Rotorblätter in Fahnenstellung stehen. Die Böe hat dann eine geringe Angriffsfläche auf die Rotorblätter. Außerdem weisen hierbei die Rotorblätter mit ihrer Vorderkante zum Wind bzw. zur Böe und mit ihrer Hinterkante in die entgegengesetzte Richtung und das Rotorblatt ist in einer solchen Ausrichtung, nämlich von der Vorder- zur Hinterkante besonders starr. Die Rotorblätter bieten also für diesen Fall nur sehr wenig Angriffsfläche bei einer gleichzeitig hohen Stabilität in dieser Angriffsrichtung.

Aber auch das Auftreffen der Böe auf die Windenergieanlagengondel von vorn führt zu einer geringeren Belastung als bei dem Auftreffen einer Böe seitlich auf die Gondel der Windenergieanlage, weil die Gondel seitlich mehr Angriffsfläche bietet als von vorn. Außerdem ist überhaupt das Design der Gondel auf Wind von vorn ausgerichtet.

Entsprechend würde also die Windenergieanlage auf die Belastung ausgelegt, die auftritt, wenn eine 50-Jahres-Böe von vorn auf die Windenergieanlage mit Rotorblättern in Fahnenstellung trifft. Erfolgt die Auslegung auf diese Situation, kann eine schwächere Auslegung vorgenommen werden, als wenn die Böe von einer beliebigen Seite bzw. aus beliebiger Richtung, insbesondere seitlich, auftrifft. Die Komponenten können nun also schwächer ausgelegt werden, was zu Einsparungen an diversen Stellen führen kann. Neben dem grundsätzlichen Einsparungspotential für das Material kann ggf. sogar der Transport und auch die Größe bzw. Hebefähigkeit des Krans zum Errichten der Windenergieanlage betroffen sein.

Vorzugsweise ist die reduzierte Maximalbelastung eine solche, die auftritt, wenn die 50-Jahres-Böe auf die Windenergieanlage aus einem Sektor von vorn trifft, der insbesondere etwa einen Bereich von +-20° von vorn bezeichnet. In diesem Fall wird also vorgeschlagen, die Windenergieanlage auf eine Belastung auszulegen, die bei einer 50-Jahres-Böe aus diesem vorderen Sektor auftreten kann. Hierdurch ist eine reduzierte Auslegung möglich, aber gleichzeitig verbleibt eine gewisse Toleranz für die mögliche Auftrittsrichtung der Windböe von vorn. Die Windenergieanlage ist dann also knapper ausgelegt als für Windböen aus beliebiger Richtung, gleichzeitig aber nicht auf exakt eine Auftrittsrichtung beschränkt.

Eine so knapp ausgelegte Windenergieanlage sollte in der Konsequenz dann auch später so betrieben werden, dass eine solche 50-Jahres-Böe auch nur aus dem Bereich auf die Windenergieanlage trifft, auf den die Anlage somit ausgelegt wurde. Durch das Festlegen eines solchen Sektors von vorne, insbesondere über diesen Bereich von +-20°, wird ein praktikabler Kompromiss gefunden.

Vorzugsweise betrifft die Auslegung der Windenergieanlage auf die reduzierte Maximalbelastung wenigstens eine der Komponenten aus der Liste umfassend:
- eine Gondel zum Aufnehmen des Generators,
- einen Turm zum Tragen der Gondel,
- ein Turmfundament zum Tragen des Turmes, und
- die Rotorblätter.

Erfindungsgemäß wird zudem ein Verfahren nach Anspruch 5 vorgeschlagen. Demnach wird ein Verfahren zum Betreiben einer Windenergieanlage vorgeschlagen. Dieses Verfahren setzt zunächst eine Windenergieanlage voraus, die mit einer Azimutverstellung ausgestattet ist, um die Windenergieanlage im Betrieb zum Wind auszurichten. Außerdem ist die Windenergieanlage mit verstellbaren Rotorblättern ausgestattet, um die Rotorblätter auf die vorherrschende Windgeschwindigkeit einzustellen und ggf. in den Wind zu drehen. Unter diesem Betreiben der Windenergieanlage ist somit das Ausrichten der Windenergieanlage zu verstehen und die Windenergieanlage erzeugt hierbei häufig keinen Strom mehr. Sofern die Windbedingungen - und andere Bedingungen - es wieder zulassen wird die Windenergieanlage aber auch wieder so betrieben, dass sie Strom erzeugt.

Das Verfahren schlägt nun vor, bei Sturm, wenn das Auftreten einer 50-Jahres-Böe nicht ausgeschlossen werden kann, oder insbesondere wenn das Auftreten einer 50-Jahres-Böe wahrscheinlich ist, die Windenergieanlage in ihrer Azimutposition so in den Wind auszurichten, dass eine aus der vorherrschenden Windrichtung kommende 50-Jahres-Böe nur zu der reduzierten Maximalbelastung führt.

Es wird somit vorgeschlagen, die Windenergieanlage auch im Sturmfall, also unabhängig davon, ob die Windenergieanlage in Betrieb ist oder nicht, zum vorherrschenden Wind hin auszurichten. Selbst wenn sich also der aerodynamische Rotor die Windenergieanlage nicht mehr dreht und die Windenergieanlage keinen Strom erzeugt, insbesondere weil sie aus Gründen der Sturmsicherheit keine Leistung mehr erzeugt, wird sie gleichwohl in den Wind gedreht und dem Wind auch entsprechend nachgeführt.

Vorzugsweise erfolgt eine solche Ausrichtung der Windenergieanlage mit ihrer Azimutposition in den Wind während die Rotorblätter in Fahnenstellung stehen.

Vorzugsweise wird die Windenergieanlage besonders bei Sturm mit ihrer Azimutposition in den Wind ausgerichtet und ihm nachgeführt, wobei dafür benötigte Leistung durch einen Energiespeicher bereitgestellt wird, wenn keine oder nicht ausreichend Leistung aus dem elektrischen Versorgungsnetz und/oder von dem Generator bezogen werden kann. Dies betrifft also insbesondere die Situation, dass die Windenergieanlage nicht mehr in einem produzierenden Betriebsmodus ist. Hierunter fällt die Situation, dass die Windenergieanlage wegen zu hoher Windgeschwindigkeiten zu ihrem eigenen Schutz nicht mehr betrieben wird. Hierunter fällt aber auch eine Situation, in der die Windenergieanlage aus Gründen des Netzschutzes nicht mehr in das Netz einspeist, insbesondere auch nicht mehr mit dem Netz verbunden ist. Hierunter fällt auch die Situation, dass die Windenergieanlage bereits vollständig errichtet ist, ihre Erstinbetriebnahme aber noch nicht erfolgt ist.

Demnach wird vorgeschlagen, die Windenergieanlage in jedem Fall, zumindest bei Sturmsituationen, wenn eine 50-Jahres-Böe nicht ausgeschlossen werden kann, in den Wind auszurichten. Damit dies auch unter allen Umständen gewährleistet werden kann, wird vorgeschlagen, dies ggf. mit Hilfe von Energie aus einem Energiespeicher vorzunehmen.

Gemäß einer Ausführungsform wird ein Verfahren vorgeschlagen, dadurch gekennzeichnet ist, dass wenigstens ein Messgerät zum Erfassen einer Windrichtung an der Windenergieanlage vorgesehen ist und das wenigstens eine Messgerät zum Erfassen der Windrichtung auch bei Sturm betrieben wird, wenn das Auftreten einer 50-Jahres-Bö nicht ausgeschlossen werden kann, oder insbesondere wahrscheinlich ist. ES wird somit ein ständiges Betreiben des Messgerätes für die Bestimmung der Windrichtung vorgeschlagen, damit für die Windenergieanlage, auch wenn sie keine Leistung ins Netz einspeist, die Windrichtung bekannt ist und daher die Richtung bekannt ist, aus der auch etwa die 50-Jahres-Bö zu erwarten ist. Das Messgerät wird vorzugsweise über einen elektrischen Energiespeicher betrieben, so dass es auch betrieben werden kann, wenn ein Netzausfall auftritt. Immerhin kann ein starker Sturm auch Ursache für einen Netzausfall sein.

Vorzugsweise ist ein zusätzliches Messgerät besonders als Redundanzmessgerät zum Erfassen der Windrichtung vorgesehen. Die Windenergieanlage kann somit auch noch im Falle eines Ausfalls eines der Messgeräte die Windrichtung erkennen und ggf. die Windenergieanlage so ausrichten, dass die 50-Jahr-Bö nicht die Anlage von einer ungünstigen Richtung trifft. Vorzugsweise sind hierbei wenigstens zwei Messgeräte zur Erfassung der Windrichtung vorgesehen, die in einem solchen Abstand zu einander angeordnet sind und betrieben werden, dass sie nicht zugleich durch ein Rotorblatt abgedeckt werden. Somit kann wenigstens immer eines der Messgeräte die Windrichtung ausreichend erfassen.

Vorzugsweise werden diese zum Betreiben der Windenergieanlage vorgeschlagenen Verfahren für eine Windenergieanlage angewendet, die gemäß einem der vorstehend beschriebenen Verfahren zum Auslegen einer Windenergieanlage ausgelegt wurden. Vorteilhafterweise arbeiten diese beiden Verfahren zusammen. Demnach wird nämlich die Windenergieanlage zunächst wie beschrieben knapp ausgelegt und dann mit einem Verfahren betrieben, das die Bedingungen einhält, die für die knappe Auslegung zugrunde gelegen haben. Aber auch ohne eine solche Auslegung kann das vorgeschlagene Verfahren zum Betreiben der Windenergieanlage zu einer Reduzierung der Belastung führen.

Gemäß einer Ausgestaltung wird vorgeschlagen, dass zum Ausrichten der Windenergieanlage in den Wind wenigstens eine Windrichtungsinformation wenigstens einer weiteren Windenergieanlage verwendet wird. Dieser Vorschlag ist besonders im Falle eines Windparks vorteilhaft, kann aber auch für mehrere in der Nähe stehende Windenergieanlagen, die nicht in einem Park organisiert sind, also insbesondere keinen gemeinsamen Einspeisepunkt verwenden, sinnvoll sein. Besonders bei Sturmverhältnissen, die hier relevant sind, ist auch das Messen der Windrichtung nicht unbedingt ganz so einfach oder ganz so präzise, wie im Falle bei schwachen, laminaren Winden. Somit kann über die Verwendung weiterer Windrichtungsinformationen von anderen benachbarten Windenergieanlagen oder Windenergieanlagen desselben Windparks die Informationslage verbessert werden. Über die Verwendung weiterer Windrichtungsinformationen anderer Windenergieanlagen können außerdem ggf. Windrichtungsänderungen schneller erkannt werden. Ggf. kann auch eine örtliche Variation der Windrichtung über dem Park vorhanden sein. Auch eine solche örtliche Variation der Windrichtung kann berücksichtigt werden und die Windenergieanlagen können in ihrer Ausrichtung ggf. daran angepasst werden.

Beispielsweise kann eine Windrichtung aus gemittelten Windrichtungsmesswerten gebildet werden. Wird aber über die Auswertung diverser Windrichtungen von den Windenergieanlagen des Parks festgestellt, dass eine örtliche Veränderung der Windrichtung über den Windpark vorliegt, wäre eine Mittelung der Windrichtungswerte über den gesamten Park nicht sachgerecht. Stattdessen kann aus einer so erfassten Windrichtungsverteilung die jeweilige Windrichtung für die betreffende Windenergieanlage verwendet werden. Andere Möglichkeiten sind auch, die Werte der Windrichtungen mehrerer, bezogen auf den Wind etwa hintereinander stehender Windenergieanlagen zu verwenden.

Vorzugsweise wird vorgeschlagen, dass die Windenergieanlage bei Sturm mit ihrem Rotor so ausgerichtet wird, dass ein Rotorblatt in einer 6-Uhr-Stellung steht und/oder dass sich der Rotor um seine Rotordrehachse frei drehen kann. Es wurde erkannt, dass vorteilhafterweise eine sehr hohe Belastung vermieden werden kann, wenn besonders eine 12-Uhr-Stellung eines Rotorblattes vermieden wird. Bei einer 12-Uhr-Stellung erreicht das betreffende Rotorblatt somit die höchste Höhe, die überhaupt möglich ist. Die Windgeschwindigkeiten nehmen aber mit der Höhe zu und somit wäre dabei die höchste Belastung gegeben, bei sonst gleichen Vergleichsparametern. Wird ein Rotorblatt in die 6-Uhr-Stellung gedreht, verbleiben als höchste Stellungen somit noch die 10-Uhr- und die 2-Uhr-Stellung der beiden übrigen Rotorblätter einer 3-Blatt-Windenergieanlage.

Eine Entlastung kann aber auch dadurch hervorgerufen werden, dass der Rotor nicht in einer Position festgehalten wird, sondern dass man ihn frei drehen lässt. Treten nun besondere Belastungen an dem Rotorblatt auf, kann das Rotorblatt dieser Belastung zumindest teilweise nachgeben, wenn sich der Rotor dadurch ein wenig dreht. Besonders bevorzugt wird vorgeschlagen, die Windenergieanlage soweit wie möglich in eine Position mit einem Rotorblatt in 6-Uhr-Stellung zu führen, das freie Drehen des Rotors dabei gleichwohl zuzulassen. Das wäre beispielsweise durch eine entsprechende minimale Pitchverstellung eines Rotorblatts, besonders des unteren Rotorblatts in 6-Uhr-Stellung bzw. in fast 6-Uhr-Stellung möglich. Die anderen beiden Rotorblätter könnten dann in der Position verbleiben, die die geringste Belastung erwarten lässt. Das untere der Rotorblätter wäre ohnehin weniger Belastungen ausgesetzt.

Die geringe Belastung des Rotorblatts in 6-Uhr-Stellung beruht zum einen darauf, dass die Windgeschwindigkeiten in geringerer Höhe geringer sind. Es beruht aber auch auf der Tatsache, dass eine Turmabschattung zu einer Entlastung führt. Effekte einer Turmabschattung gegen den Wind ergeben sich im Übrigen auch, wenn das betreffende Blatt an der Luvseite des Turms ist, also aus Windrichtung vor dem Turm. Besonders bei einer Ausrichtung des Rotorblattes in Fahnenstellung ist im Übrigen mit einer Gefahr einer Turmberührung des Blattes nicht zu rechnen.

Erfindungsgemäß wird zudem eine Windenergieanlage nach Anspruch 11 vorgeschlagen, die einen Generator und einen Rotor mit Rotorblättern aufweist und die gemäß einem vorstehend beschriebenen Auslegungsverfahren ausgelegt wurde. Außerdem oder alternativ zeichnet sich die Windenergieanlage dadurch aus, dass sie gemäß einem der vorstehend beschriebenen Verfahren zum Betreiben einer Windenergieanlage betrieben wird. Insbesondere ist diese Windenergieanlage also wie beschrieben knapp ausgelegt worden, nämlich auf eine reduzierte Maximalbelastung, und sie ist dazu vorbereitet, insbesondere durch eine entsprechend vorgesehene und implementierte Steuerung, die Bedingungen einzuhalten, die der knappen Auslegung zugrunde gelegen haben.

Es wird zudem ein Windpark nach Anspruch 13 vorgeschlagen, der mehrere erfindungsgemäße Windenergieanlagen aufweist.

Nachfolgend wird die Erfindung anhand von Ausführungsformen beispielhaft unter Bezugnahme auf die begleitenden Figuren näher erläutert.
- Fig. 1: zeigt eine Windenergieanlage in einer perspektivischen Ansicht schematisch.
- Fig. 2: zeigt einen Windpark in einer schematischen Darstellung.
- Fig. 3: zeigt eine Draufsicht auf eine Windenergieanlagengondel in einer schematischen und vereinfachten Darstellung zur Veranschaulichung möglicher Windangriffsrichtungen.
- Fig. 4: veranschaulicht an einer schematischen Belastungskurve B mögliche Belastungsschwankungen in Abhängigkeit der Angriffsrichtung des Windes.

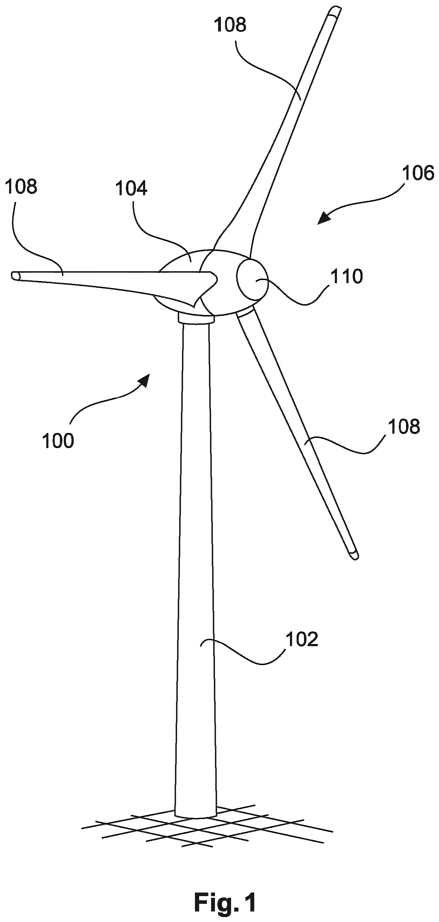

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

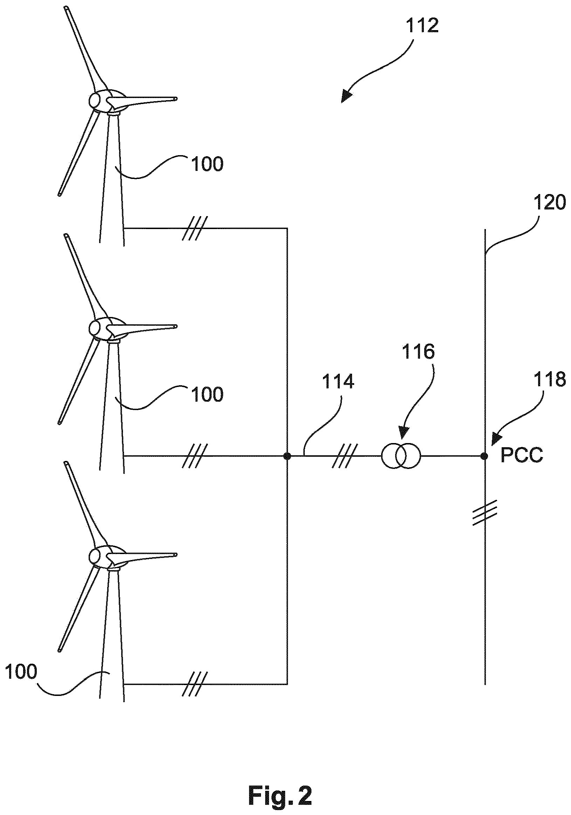

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

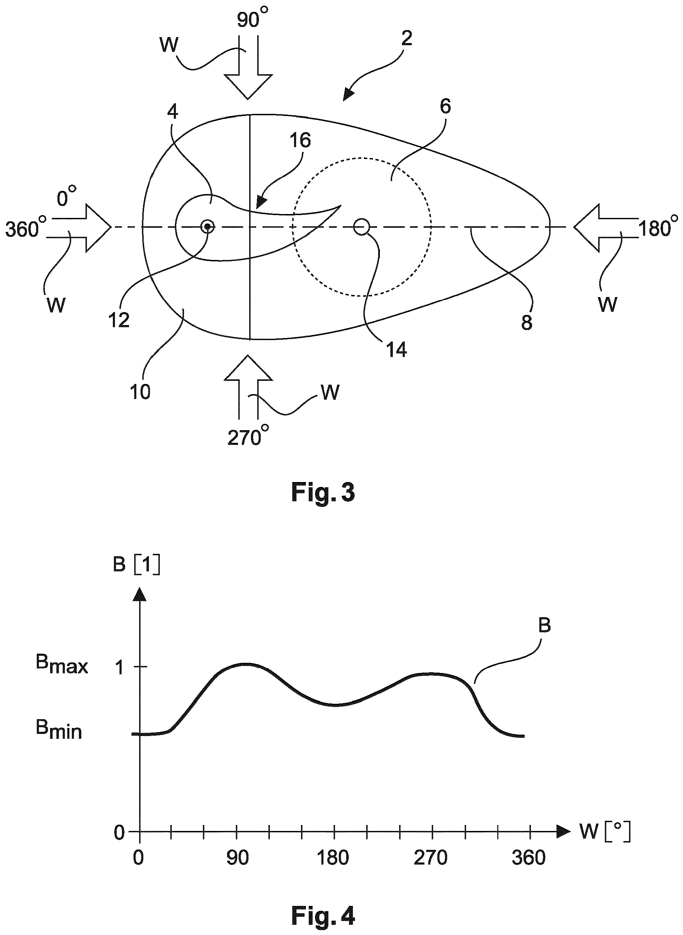

Figur 3 zeigt von einer Windenergieanlage in einer schematischen Draufsicht eine Gondel 2 und in seinem bereitesten Umriss ein angedeutetes Rotorblatt 4 sowie gestrichelt dargestellt einen Umfang eines Turmes 6 in seinem oberen Bereich. Grundsätzlich wird, wie in den Figuren 1 und 2 angedeutet, von einer Windenergieanlage mit drei Rotorblättern ausgegangen. Somit wären in Figur 3 zusätzlich zu dem Rotorblatt 4, das hier in einer 12-Uhr-Stellung gezeigt ist, zwei weitere Rotorblätter zu sehen, nämlich in 4-Uhr- und 8-Uhr-Stellung. Zur Vereinfachung sind diese beiden Rotorblätter aber weggelassen worden. Das gezeigte Rotorblatt ist somit zusammen mit dem gezeigten Spinner 10 um die etwa horizontale Rotordrehachse 8 drehbar angeordnet.

Außerdem ist das Rotorblatt 4 um die nur als Punkt dargestellte Pitchachse 12 in ihrem Anstellwinkel zum Wind verstellbar. Figur 3 zeigt insoweit eine Fahnenstellung des Rotorblatts 4. Dabei ist zu beachten, dass Fig. 3 eine schematische Darstellung ist, die zur Vereinfachung der Darstellung nicht auf eine übliche Verwindung des Rotorblattes eingeht. Der gezeigte Abschnitt des Rotorblattes 4 soll somit repräsentative für das gesamte Rotorblatt 4 die Fahnenstellung illustrieren.

Die gezeigte Gondel 2 ist zudem um eine vertikale Azimutachse 14 verstellbar, so dass die Gondel 2 in einer gewünschten Position zum Wind ausgerichtet werden kann.

Die Figur 3 veranschaulicht symbolisch vier mögliche Windrichtungen W, die hier für vier Richtungen, nämlich 0°, 90°, 180° und 270° eingezeichnet sind. Natürlich sind auch sämtliche Zwischenrichtungen möglich. Diese Windrichtungen W beziehen sich in dieser Darstellung auf die ausgerichtet Gondel 2 und damit auf die Ausrichtung der Rotordrehachse 8. Diese auf die Gondel bezogene relative Ausrichtung der Windrichtung W liegt auch der Darstellung der Figur 4 zugrunde, die nachstehend noch erläutert wird.

Figur 3 zeigt nun eine bevorzugte Ausrichtung der Windenergieanlage mit ihrer Gondel 2 für den Fall, dass die Windrichtung wie eingezeichnet 0° beträgt. Diese bevorzugte Ausführung weist auch die Rotorblätter 4 in Fahnenstellung auf, wie dies für das exemplarische Rotorblatt 4 angedeutet ist.

Insoweit stellen die drei weiteren eingezeichneten Windrichtungen, nämlich mit 90°, 180° und 270° Windrichtungen bzw. Ausrichtungen der Gondel 2 dazu dar, die so nicht gewünscht sind.

Besonders für die Windrichtung W mit 90° ergibt sich eine große Angriffsfläche auf die Gondel 2 wegen des seitlichen Anströmens. Außerdem strömt der Wind hier auf die Druckseite 16 des Rotorblatts 4. Allerdings ist zu beachten, dass die Figur 3 nur veranschaulichend ist und besonders bevorzugt die Windenergieanlage mit einem Rotorblatt in 6-Uhr-Stellung und den anderen beiden Rotorblättern in 10-Uhr- bzw. 2-Uhr-Stellung vorgeschlagen wird.

Hierdurch ergibt sich, dass auch die entgegengesetzte Anströmung, nämlich mit 270°, keine viel kleinere Belastung für die Windenergieanlage insgesamt bedeutet.

Figur 3 veranschaulicht insoweit auch die Windrichtung W von 180°, also für Wind, der von hinten an der Gondel angreift. Eine solche Belastung dürfte zwar geringer sein als eine Belastung für seitlichen Wind, weil auch die Angriffsfläche an der Gondel geringer ist als bei seitlichem Wind, aber die Windenergieanlage ist grundsätzlich auf Wind von vorne, also Wind mit 0° bzw. 360° gemäß Figur 3 ausgelegt. Beispielsweise ist auch die gezeigte Fahnenstellung des Rotorblatts 4 für einen Wind der Windrichtung W von 0° bzw. 360° günstiger als für eine Windrichtung W von 180°.

Figur 4 zeigt eine Belastungskurve B, die einen möglichen Belastungsverlauf in Abhängigkeit der Windrichtung W veranschaulichen soll. Als Windrichtung W, die mit entsprechenden Gradzahlen an der Abszisse eingetragen ist, wird das Verständnis gemäß Figur 3 zugrunde gelegt. 0° bzw. 360° ist also eine Windrichtung von vorn auf die Gondel 2 bzw. den Spinner 10.

Die Figur 4 veranschaulicht nun, wobei die Kurve einen vereinfachten Verlauf darstellt, dass eine minimale Belastung Bₘᵢₙ bei 0° bzw. 360° vorliegt. Eine maximale Belastung wird bei 90° angenommen und eine ähnlich hohe, nur etwas geringere Belastung bei 270°. Bei 180° ist die Belastung geringer, gleichwohl aber größer als die minimale Belastung bei 0°.

Die veranschaulichende Kurve der Figur 4 hat dabei die Belastung auf einem Belastungswert von Bₘₐₓ normiert. Die maximale Belastung Bₘₐₓ wird also als eins angesetzt.

Es wird nun vorgeschlagen, die Windenergieanlage nicht auf die Belastung Bₘₐₓ auszulegen, sondern auf die reduzierte Belastung von Bₘᵢₙ.

Es gibt viele Möglichkeiten, eine solche Belastung der Windenergieanlage zu fassen. Eine Möglichkeit besteht darin, auftretende Kräfte an einer belastungskritischen Stelle zugrunde zu legen. Solche Kräfte können von mehreren kritischen Stellen, also beispielsweise einer Blattwurzel, einem Turmkopf, einem Turmfuß und einer Achszapfenbefestigung aufgenommen und integriert werden. Eine solche Betrachtung liegt der veranschaulichenden Darstellung der Figur 4 zugrunde.

Bei der tatsächlichen Auslegung wäre dann natürlich sicherzustellen, dass jede einzelne kritische Stelle nicht über ihre Belastungsgrenze hinaus auch bei einer 50-Jahr-Böe belastet wird. Für die Auswahl der zugrunde gelegten Randbedingungen, bei denen die reduzierte Maximalbelastung auftreten, ist aber die Betrachtung einer solchen integrierenden Darstellung gemäß Figur 4 sinnvoll. Schließlich müssen diese Randbedingungen, also insbesondere Ausrichtung der Gondel, des Rotors und der Rotorblätter, dann für jede der kritischen Komponenten bzw. untersuchten Stellen zugrunde gelegt werden.

## Patentansprüche

1. Verfahren zum Auslegen einer Windenergieanlage (100) mit einem Generator und mit einem Rotor mit Rotorblättern, umfassend die Schritte
- Festlegen der Größe der auszulegenden Windenergieanlage (100), insbesondere Rotordurchmesser und Achshöhe, für einen vorgesehenen Aufstellungsort,
- Auslegen der Windenergieanlage (100) auf eine reduzierte Maximalbelastung, die niedriger ist als eine Maximalbelastung, die auftritt, wenn eine 50-Jahres-Böe von einer maximal belastenden Seite auf die Windenergieanlage (100) trifft, wobei
- die reduzierte Maximalbelastung eine Belastung ist, die auftritt, wenn die 50-Jahres-Böe auf die Windenergieanlage (100) aus einem Sektor von vorne trifft, der etwa einen Bereich von +- 20° von vorne bezeichnet.

2. Verfahren nach Anspruch 1, **dadurch gekennzeichnet, dass** die reduzierte Maximalbelastung eine Belastung ist, die auftritt, wenn die 50-Jahres-Böe auf die Windenergieanlage (100) aus einer Richtung trifft, die nicht zur maximalen Belastung führt, insbesondere, die auftritt, wenn sie aus einer Richtung auf die Windenergieanlage (100) trifft, die zu einer minimalen Belastung der Windenergieanlage (100) führt.

3. Verfahren nach Anspruch 1 oder 2, **dadurch gekennzeichnet, dass** die reduzierte Maximalbelastung eine Belastung ist, die auftritt, wenn die 50-Jahres-Böe auf die Windenergieanlage von vorne trifft, insbesondere wenn der Rotor verstellbare Rotorblätter ausweist und die Rotorblätter in Fahnenstellung stehen.

4. Verfahren nach einem der vorstehenden Ansprüche, **dadurch gekennzeichnet, dass** auf die reduzierte Maximalbelastung wenigstens eine der Komponenten aus der folgenden Liste ausgelegt wird, die die folgenden Komponenten umfasst:
- eine Gondel (2) zum Aufnehmen des Generators,
- einen Turm zum Tragen der Gondel (2),
- ein Turmfundament zum Tragen des Turmes, und
- die Rotorblätter.

5. Verfahren zum Betreiben einer Windenergieanlage (100), die entsprechend des Verfahrens gemäß Anspruch 1 ausgelegt wurde, ausgestattet
- mit einer Azimutverstellung um die Windenergieanlage (100) im Betrieb zum Wind auszurichten,
- und mit verstellbaren Rotorblättern, um diese auf die vorherrschende Windgeschwindigkeit einzustellen, wobei
- bei Sturm, wenn das Auftreten einer 50-Jahres-Bö nicht ausgeschlossen werden kann, oder insbesondere wahrscheinlich ist, die Windenergieanlage (100) in ihrer Azimutposition so in den Wind ausgerichtet wird, dass eine aus der vorherrschenden Windrichtung kommende 50-Jahres-Bö nur zu einer reduzierten Maximalbelastung führt, wobei die reduzierte Maximalbelastung eine Belastung ist, die auftritt, wenn die 50-Jahres-Böe auf die Windenergieanlage (100) aus einem Sektor von vorne trifft, der etwa einen Bereich von +- 20° von vorne bezeichnet, wobei
- die Windenergieanlage (100), insbesondere bei Sturm, mit ihrer Azimutposition in den Wind ausgerichtet und ihm nachgeführt wird, und dafür benötigte Leistung durch einen Energiespeicher bereitgestellt wird, wenn keine oder nicht ausreichend Leistung aus dem elektrischen Versorgungsnetz (120) und/oder von dem Generator bezogen werden kann.

6. Verfahren nach Anspruch 5, **dadurch gekennzeichnet, dass** die Windenergieanlage (100), insbesondere bei Sturm, mit ihrer Azimutposition in den Wind ausgerichtet und ihm nachgeführt wird, selbst wenn die Rotorblätter in Fahnenstellung stehen und/oder der Generator keine Leistung erzeugt und/oder keine Leistung in das elektrische Versorgungsnetz (120) einspeist.

7. Verfahren nach einem der Ansprüche 5 bis 6, **dadurch gekennzeichnet, dass** wenigstens ein Messmittel zum Erfassen einer Windrichtung an der Windenergieanlage vorgesehen ist und das wenigstens eine Messmittel zum Erfassen der Windrichtung auch bei Sturm betrieben wird, wenn das Auftreten einer 50-Jahres-Bö nicht ausgeschlossen werden kann, oder insbesondere wahrscheinlich ist.

8. Verfahren nach einem der Ansprüche 5 bis 7, **dadurch gekennzeichnet, dass** die Windenergieanlage (100) durch ein Verfahren nach einem der Ansprüche 1 bis 4 ausgelegt ist.

9. Verfahren nach einem der Ansprüche 5 bis 8, **dadurch gekennzeichnet, dass** zum Ausrichten der Windenergieanlage (100) in den Wind wenigstens eine Windrichtungsinformation wenigstens einer weiteren Windenergieanlage (100) verwendet wird, wobei bei Anwendung des Verfahrens in einem Windpark (112) die wenigstens eine weitere Windenergieanlage (100) eine Windenergieanlage (100) desselben Windparks (112) ist.

10. Verfahren nach einem der Ansprüche 5 bis 9, **dadurch gekennzeichnet, dass** die Windenergieanlage (100) bei Sturm mit ihrem Rotor so ausgerichtet wird, dass ein Rotorblatt in einer 6-Uhr-Stellung steht und/oder dass sich der Rotor um seine Rotordrehachse frei drehen kann.

11. Windenergieanlage (100) mit einem Generator und mit einem Rotor mit Rotorblättern wobei die Windenergieanlage (100) durch ein Verfahren gemäß einem der Ansprüche 1 bis 4 ausgelegt wurde und dafür ausgelegt ist mit einem Verfahren gemäß einem der Ansprüche 5 bis 10 betrieben zu werden.

12. Windenergieanlage (100) nach Anspruch 11, **dadurch gekennzeichnet, dass** wenigstens ein Messmittel zum Erfassen einer Windrichtung über einen elektrischen Energiespeicher betreibbar ist und/oder wenigstens zwei Messmittel an der Windenergieanlage vorgesehen sind jeweils zum Erfassen einer Windrichtung.

13. Windpark (112) umfassend wenigstens zwei Windenergieanlagen (100) gemäß Anspruch 11.

## Claims

1. Method for designing a wind energy plant (100) with a generator and with a rotor with rotor blades, comprising the steps
- determining the size of the wind energy plant (100) which is to be designed, more particularly the rotor diameter and axle height, for a proposed installation site,
- designing the wind energy plant (100) for a reduced maximum load, which is lower than a maximum load which occurs when a 50-year gust strikes the wind energy plant (100) from a maximum loading side, wherein
- the reduced maximum load is a load which occurs when the 50-year gust strikes the wind energy plant (100) from a sector from the front which is more particularly termed a region of +/- 20° from the front.

2. Method according to Claim 1 **characterized in that** the reduced maximum load is a load which occurs when the 50-year gust strikes the wind energy plant (100) from a direction which does not lead to the maximum load, more particularly which occurs when it strikes the wind energy plant (100) from a direction which leads to a minimal load on the wind energy plant (100).

3. Method according to Claim 1 or 2 **characterized in that** the reduced maximum load is a load which occurs when the 50-year gust strikes the wind energy plant from the front, more particularly when the rotor has displaceable rotor blades and the rotor blades are in the feathered position.

4. Method according to one of the preceding claims **characterized in that** at least one of the components from the following list is designed for the reduced maximum load, the list comprising the following components:
- a nacelle (2) for receiving the generator
- a tower for supporting the nacelle (2)
- a tower foundation for supporting the tower, and
- the rotor blades.

5. Method for operating a wind energy plant (100) configured to the method of claim 1, fitted
- with an azimuth adjustment in order to align the wind energy plant (100) to the wind during operation,
- and with adjustable rotor blades in order to set these up to the prevailing wind speed, wherein
- in the event of a storm when a 50-year gust cannot be ruled out, or more particularly is probable, the wind energy plant (100) is aligned in its azimuth position into the wind so that a 50-year gust coming from the prevailing wind direction leads only to a reduced maximum load, wherein
- the reduced maximum load is a load which occurs when the 50-year gust strikes the wind energy plant (100) from a sector from the front which is more particularly termed a region of +/- 20° from the front, wherein
- the wind energy plant (100), more particularly in the case of a storm, is aligned with its azimuth position into the wind and is tracking it, and the power required for this is provided by an energy accumulator if there is no or no sufficient power being drawn from the electric supply network (120) and/or from the generator.

6. Method according to Claim 5 **characterized in that** the wind energy plant (100) more particularly in the case of a storm is aligned with its azimuth position into the wind and is tracking it, even if the rotor blades are in the feathered position and/or the generator is not producing any power and/or no power is being fed into the electric supply network (120).

7. Method according to one of Claims 5 to 6 **characterized in that** at least one measuring means is provided for detecting a wind direction at the wind energy plant and the at least one measuring means for detecting the wind direction is also operated in the event of a storm when the appearance of a 50-year gust cannot be ruled out, or more particularly is probable.

8. Method according to one of Claims 5 to 7 **characterized in that** the wind energy plant (100) is designed by a method according to one of Claims 1 to 4.

9. Method according to one of Claims 5 to 8 **characterized in that** in order to align the wind energy plant (100) into the wind at least one wind direction information from at least one further wind energy plant (100) is used wherein when using the method in a wind farm (112) the at least one further wind energy plant (100) is a wind energy plant (100) of the same wind farm (112).

10. Method according to one of Claims 5 to 9 **characterized in that** the wind energy plant (100) is aligned in the event of a storm with its rotor so that a rotor blade is in a 6 o'clock position and/or that the rotor can rotate freely about its rotor rotational axis.

11. Wind energy plant (100) with a generator and with a rotor with rotor blades wherein the wind energy plant (100) was designed by a method according to one of Claims 1 to 4 is adapted to be operated by a method according to any one of Claims 5 to 10.

12. Wind energy plant (100) according to Claim 11 **characterized in that** at least one measuring means for detecting a wind direction can be operated by an electric energy accumulator and/or at least two measuring means are each provided on the wind energy plant for detecting a wind direction.

13. Wind farm (112) comprising at least two wind energy plants (100) according to Claim 11.

## Revendications

1. Procédé pour concevoir une éolienne (100) avec un générateur et avec un rotor avec des pales de rotor, comprenant les étapes
- de fixation de la taille de l'éolienne (100) à concevoir, en particulier du diamètre de rotor et de la hauteur axiale, pour un site d'installation prévu,
- de conception de l'éolienne (100) sur une contrainte maximale réduite, qui est inférieure à une contrainte maximale qui apparaît lorsqu'une rafale survenant tous les 50 ans frappe l'éolienne (100) depuis un côté où la contrainte est maximale, dans lequel
- la contrainte maximale réduite est une contrainte qui apparaît lorsque la rafale survenant tous les 50 ans frappe l'éolienne (100) depuis l'avant à partir d'un secteur qui désigne à peu près une zone de +- 20° par rapport à l'avant.

2. Procédé selon la revendication 1, **caractérisé en ce que** la contrainte maximale réduite est une contrainte qui apparaît lorsque la rafale survenant tous les 50 ans frappe l'éolienne (100) en provenance d'une direction, qui ne donne pas lieu à la contrainte maximale, en particulier qui apparaît lorsqu'elle frappe l'éolienne (100) en provenance d'une direction, qui donne lieu à une contrainte minimale de l'éolienne (100).

3. Procédé selon la revendication 1 ou 2, **caractérisé en ce que** la contrainte maximale réduite est une contrainte qui apparaît lorsque la rafale survenant tous les 50 ans frappe l'éolienne depuis l'avant, en particulier lorsque le rotor présente des pales de rotor ajustables et que les pales de rotor se trouvent en position de drapeau.

4. Procédé selon l'une quelconque des revendications précédentes, **caractérisé en ce qu'**est conçu sur la contrainte maximale réduite, au moins un des composants issus de la liste qui suit, qui comprend les composants suivants :
- une nacelle (2) pour recevoir le générateur,
- une tour pour supporter la nacelle (2),
- des fondations de tour pour supporter la tour, et
- les pales de rotor.

5. Procédé pour faire fonctionner une éolienne (100), qui a été conçue conformément au procédé selon la revendication 1, équipée
- d'un ajustement d'azimut pour orienter l'éolienne (100) lors de son fonctionnement par rapport au vent,
- et de pales de rotor ajustables pour régler celles-ci sur la vitesse du vent dominant, dans lequel
- en cas de tempête, quand l'apparition d'une rafale survenant tous les 50 ans ne peut pas être exclue ou en particulier est probable, l'éolienne (100) est orientée dans sa position azimutale de telle sorte dans le vent qu'une rafale survenant tous les 50 ans venant du sens du vent dominant ne donne lieu qu'à une contrainte maximale réduite, dans lequel la contrainte maximale réduite est une contrainte qui apparaît lorsque la rafale survenant tous les 50 ans frappe l'éolienne (100) depuis l'avant en provenance d'un secteur, qui désigne à peu près une zone de +- 20° par rapport à l'avant, dans lequel
- l'éolienne (100), en particulier en cas de tempête, est orientée avec sa position azimutale dans le vent et le suit, et une puissance nécessaire à cet effet est fournie par un accumulateur d'énergie si aucune puissance ou une puissance insuffisante ne peut être approvisionnée depuis le réseau d'alimentation (120) électrique et/ou par le générateur.

6. Procédé selon la revendication 5, **caractérisé en ce que** l'éolienne (100), en particulier en cas de tempête, est orientée avec sa position azimutale dans le vent et le suit, même si les pales de rotor se trouvent en position de drapeau et/ou que le générateur ne génère aucune puissance et/ou n'injecte aucune puissance dans le réseau d'alimentation (120) électrique.

7. Procédé selon l'une quelconque des revendications 5 à 6, **caractérisé en ce qu'**au moins un moyen de mesure est prévu pour détecter un sens du vent sur l'éolienne et l'au moins un moyen de mesure pour détecter le sens du vent fonctionne également en cas de tempête quand l'apparition d'une rafale survenant tous les 50 ans ne peut être exclue ou en particulier est probable.

8. Procédé selon l'une quelconque des revendications 5 à 7, **caractérisé en ce que** l'éolienne (100) est conçue par un procédé selon l'une quelconque des revendications 1 à 4.

9. Procédé selon l'une quelconque des revendications 5 à 8, **caractérisé en ce que** pour orienter l'éolienne (100) dans le vent, au moins une information du sens du vent d'au moins une autre éolienne (100) est utilisée, dans lequel en cas d'application du procédé dans un parc éolien (112), l'au moins une autre éolienne (100) est une éolienne (100) du même parc éolien (112).

10. Procédé selon l'une quelconque des revendications 5 à 9, **caractérisé en ce que** l'éolienne (100) est orientée en cas de tempête par son rotor de telle sorte qu'une pale de rotor se trouve dans une position à 6 heures et/ou que le rotor puisse tourner librement autour de son axe de rotation de rotor.

11. Éolienne (100) avec un générateur et avec un rotor avec des pales de rotor, dans laquelle l'éolienne (100) a été conçue par un procédé selon l'une quelconque des revendications 1 à 4 et est conçue pour fonctionner avec un procédé selon l'une quelconque des revendications 5 à 10.

12. Éolienne (100) selon la revendication 11, **caractérisée en ce qu'**au moins un moyen de mesure pour détecter un sens du vent peut fonctionner par l'intermédiaire d'un accumulateur d'énergie électrique et/ou au moins deux moyens de mesure sont prévus sur l'éolienne, respectivement pour détecter un sens du vent.

13. Parc éolien (112) comprenant au moins deux éoliennes (100) selon la revendication 11.
